# EUROPEAN PATENT SPECIFICATION

(11) **EP 1 587 299 B1**
(45) Date of publication and mention of the grant of the patent: **10.08.2016**
(21) Application number: 05006807.1
(22) Date of filing: 29.03.2005
(51) Int. Cl.: H04N 1/41, H04N 1/64

(54) **Compressing and decompressing image of a mobile communication terminal**
Komprimierung und Dekomprimierung eines Bildes in einem mobilen Kommunikationsendgerät
Compression et décompression d'une image dans un terminal de communication mobile

(30) Priority: 13.04.2004 KR 2004025525
(43) Date of publication of application: 19.10.2005
(73) Proprietor: LG Electronics, Inc., Seoul 150-721 (KR)
(72) Inventor: An, Sun-Hwan, Seoul (KR)
(74) Representative: Katérle, Axel

(56) References cited:
- WO-A-96/25010
- WO-A-03/065709
- US-A1- 2004 179 731
- BELLAACHIA A ET AL: "Fast searching over compressed text using a new coding technique: tagged sub-optimal code (TSC)" DATA COMPRESSION CONFERENCE, 2004. PROCEEDINGS. DCC 2004 SNOWBIRD, UT, USA MARCH 23-25, 2004, PISCATAWAY, NJ, USA,IEEE, 23 March 2004 (2004-03-23), pages 526-526, XP010692584 ISBN: 978-0-7695-2082-7

## Description

### BACKGROUND OF THE INVENTION

### Field of the Invention

The present invention relates to image compression and, more particularly, to a method for compressing and decompressing an image of a mobile communication system.

### Description of the Related Art

A mobile communication terminal based on a text or a black and white screen includes a very small amount of display information, so it has a very small memory region allocated for the display information. Recently, however, as mobile communication terminals start implementing 4096 colors and 65000 colors, display information increasingly occupies the memory region, and accordingly, data storage capacity of the memory of the mobile communication terminals becomes larger. '

Assuming that a mobile communication terminal can implement 65000 colors and display an image of 128 pixels in width and length, the total number of pixels of the images expressed by the mobile communication terminal is 16384 (128x128) and colors of each pixel need to be expressed by more than 16 bits of data. As such, size of one image file stored in the memory of the mobile communication terminal can exceed 32 K bytes. Particularly, if the image information (or pixel information) of such size is not compressed, a large area of memory space is required.

Image compression algorithms such as Run length, Huffman coding, LAW or a file compression algorithm of a GIF (Graphics Interchange Format) or a JPG (Joint Photographic Groups) format can be used. Different compression algorithms are employed according to the type of terminals or terminal manufacturers.

For example, WO 03/065709 A1 describes a method and apparatus for compression of color images for a portable communication device. The color image is compressed by associating a variable length color code with each color of the image, and then forming bitplanes each representing one bit position of the binary color codes for each pixel of the color image. The variable length codes are optimized, such as by a canonical Huffman algorithm.

The above described related art image compression methods have a problem in that since information of every pixel is compressed, load amount in decompressing the compressed information increases and a display speed is slow. In addition, file compression algorithms such as the GIF or the JPG have a problem of damaging an original image. Especially, in case of the GIF, color expression is limited to 256 colors, failing to sufficiently utilize the LCD (Liquid Crystal Display) implementing various colors (4096 colors or 65000 colors).

A method and system is needed that can overcome the above problems.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings. To achieve these and other advantages and in accordance with the purpose of the present invention, as embodied and broadly described, an image compression method is provided.

In accordance with one embodiment of the invention, a method for compressing an image constituted by a plurality of pixels in a mobile communication terminal is provided. Each pixel has one of a plurality of colors, the color of each pixel is represented by color information of each pixel, an original identification code specific to each color is assigned to each color, and the color information of each pixel at least contains the original identification code assigned to the color of each pixel. The method comprises: scanning pixels constituting an image; for each one of the plurality of colors, counting the number of pixels having the one color; determining that the one color is a frequently presented color when the counted number of pixels is more than or equals to a reference number; assigning to each frequently presented color, a new identification code specific to each frequently presented color, wherein the size of the new identification code is determined according to the number of frequently presented colors and is smaller than that of the original identification code specific to each frequently presented color. For each one of the plurality of pixels, when the color of the one pixel is not the frequently presented color, the color information of the one pixel is stored in an image file; and when the color of the one pixel is the frequently presented color, the original identification code contained in the color information of the one pixel is replaced with the new identification code assigned to the color of the one pixel, and the color information of the one pixel is stored in the image file after replacing. The color information of each pixel is stored including a code discrimination bit for distinguishing whether an identification code provided to the color information is a new identification code or an original identification code.

In one embodiment, the image compression method comprises including a data structure comprising cross-references between the first and second identification codes and the plurality of pixels in the image.

In accordance with another aspect of the invention, a method for decompressing a compressed image of a mobile communication terminal comprises detecting a look-up table and color information of pixels from a compressed image file. Color information of each pixel is checked and if a color identification code of a corresponding pixel has been newly assigned, a corresponding original identification code is searched from the look-up table and stored in a display buffer.

The color of each pixel is displayed on a screen with reference to the information stored in the buffer. The storing comprises checking a code discrimination bit included in color information of each pixel to determine whether a color identification code of a corresponding pixel is a new identification code or an origination identification code.

The method for decompressing a compressed image of a mobile communication terminal further comprises checking color information of each pixel. If the color identification code is the original identification code of the corresponding pixel, the identification code is stored as it is in the buffer.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

The invention will be described in detail with reference to the following drawings in which like reference numerals refer to like elements wherein.
Figure 1 is a flow chart of an image compression method in accordance with one embodiment of the present invention.
Figure 2 is a flow chart of a method for decompressing a compressed image in accordance with one embodiment of the present invention.
Figure 3 illustrates the construction of image data stored in an image file in accordance with one embodiment of the present invention.

Features, elements, and aspects of the invention that are referenced by the same numerals in different figures represent the same, equivalent, or similar features, elements, or aspects in accordance with one or more embodiments of the system.

### DETAILED DESCRIPTION OF THE PREFERRED EMBODIMENTS

The present invention implements an image compressing method in which a storage code of a small size is newly assigned to a color with high presentation frequency and an original identification code is assigned as it is to a color with low presentation frequency in an image and then stored.

In accordance with one embodiment, a mobile communication terminal comprises a high resolution color LCD, for example, implementing 65000 colors and processes an image of a size of 16x16 pixels in width and length, for example. In one embodiment, the image consists of 6 colors (A, B, C, D, E and F), for example.

For storing the image, the mobile communication terminal checks color information of pixels constituting an image to obtain presentation frequency of each color (A, B, C, D, E and F). Presentation frequency for a color is the number of pixels having the corresponding color (e.g., A, B, C, D, E and F). Then, the mobile communication terminal assigns a new identification code ('storage codes') to colors presented in pixels equal to or greater than a reference number (e.g., 50) ('frequently presented colors').

**[Table 1]**

| color | Identification code | number of pixels |
|---|---|---|
| A | Ox0000 | 50 |
| B | Ox000f | 25 |
| E | Oxff00 | 70 |
| D | Ox0ff0 | 5 |
| C | Ox00ff | 6 |
| F | Oxffff | 100 |

Table 1 illustrates an exemplary color assignment table, in accordance with one embodiment. In Table 1, a different 2-bit storage code is assigned to colors A, E and F with presentation frequency equal to or greater than the reference value (e.g., 50). A length of the storage code is determined according to the number of frequently presented colors. For example, if there are four frequently presented colors, the length of the storage code can be 2 bits (00, 01, 10, 11). If there are five frequently presented colors, 3 bits (000, 001, 010, 011, 100) can be enough for the length of the storage code. The above reference values may vary and can be determined by a user or a system, depending on implementation.

Table 2 shows sizes of storage codes according to the number of frequently presented colors, in accordance to an exemplary embodiment.

**[Table 2]**

| The number of frequently presented colors | Sizes of storage codes |
|---|---|
| 1 or 2 | 1 bit |
| 3 or 4 | 2 bit |
| 5~8 | 3 bit |
| 9~16 | 4 bit |
| . | . |
| . | . |
| . | . |

When analysis for the color information of pixels is completed, the mobile communication terminal assigns a new, for example, 2-bit storage code to pixels with frequently presented colors, instead of their original color identification codes. Meanwhile, for the less frequently presented colors, the mobile communication terminal maintains the original color identification code for each pixel.

Table 3 is a look-up table showing original identification codes and storage codes of frequently presented colors (A, E and F).

**[Table 3]**

| Frequently presented colors | Identification code | Storage code (binary) |
|---|---|---|
| A | Ox0000 | 0 ('00') |
| E | Oxff00 | 1 ('01') |
| F | Oxffff | 2 (10') |

When the mobile communication terminal stores color information of each pixel in the image file, it also stores the look-up table. Thus, when the mobile communication terminal decompresses data of the image file, it decompresses color information of each pixel stored in the image file with reference to the look-up table.

In the present invention, in order to determine whether an identification code stored in each pixel is an original color identification code or a storage code of a corresponding pixel, a code discrimination bit (1 or 0) is added in front of the color information (e.g., identification code or storage code). If the code discrimination bit is '0' for example, the following color information is the original identification code, and if the code discrimination bit is '1' for example, the following color information is the new storage code (e.g., 2 bits).

Table 4 shows a comparison between a binary code of each color stored without application of a compression algorithm and a binary code of each color stored according to a compression algorithm of the present invention.

**[Table 4]**

| Colors | Binary code of each color stored without application of a compression algorithm | Binary code of each color stored according to a compression algorithm of the present invention (code discrimination bit + storage code (identification code) |
|---|---|---|
| A | "0000 0000 0000 0000" | "1 + 00" |
| B | "0000 0000 0000 1111" | "0 + 0000 0000 0000 1111" |
| C | "1111 1111 0000 0000" | "1 + 01" |
| D | "0000 1111 1111 0000" | "0 + 0000 1111 1111 0000" |
| E | "0000 0000 1111 1111" | "0 + 0000 0000 1111 1111" |
| F | "1111 1111 1111 1111" | "1 + 10" |

As noted in Table 4, when the compression algorithm in accordance with the present invention is applied, colors with high presentation frequency (e.g., the frequently presented colors) requires a smaller storage space (e.g., 3 bits) while colors with low presentation frequency require a larger storage space (e.g., 17 bits).

Although it may vary according to an image, typically the frequently presented colors account for approximately 10~20% of the entire colors that are presented in 80 % of the entire pixels. Thus, a compression rate of the algorithm of the present invention can be quite high in such circumstances.

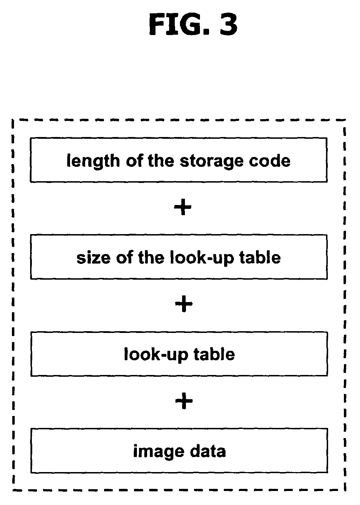

Referring to Figure 3, an exemplary stored image data comprises 'length of the storage code' + 'size of the look-up table' + look-up table' + 'image data'. The image data is the color information of each pixel. An exemplary storage form is shown in Table 4.

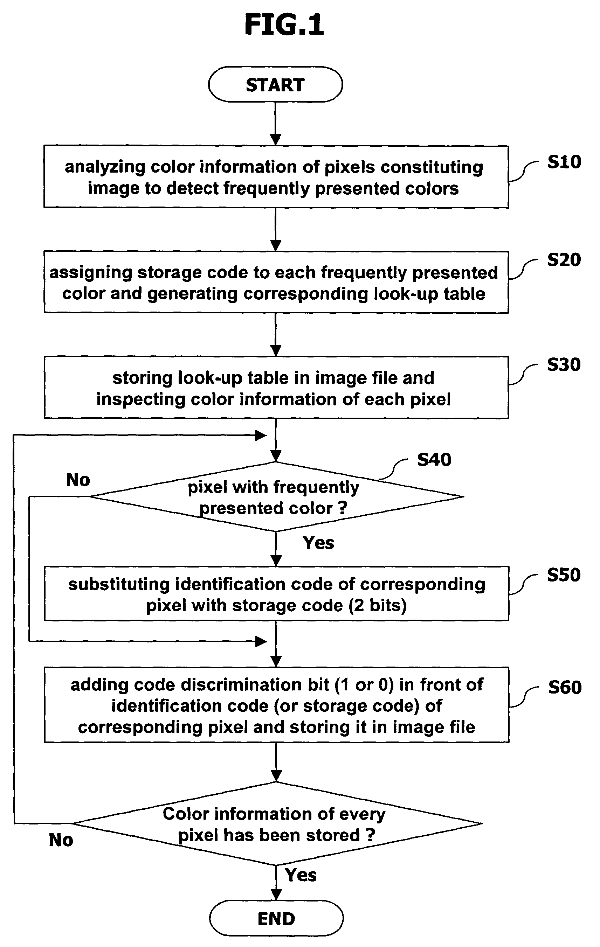

Referring to Figure 1, to store an image, the mobile communication terminal analyzes color information of pixels constituting the image. The mobile communication terminal inspects each presentation frequency of each color to detect frequently presented colors (S10). The mobile communication terminal assigns a different storage code to each frequently presented color as detected and then generates a look-up table as shown in Table 3 (S20).

Thereafter, the mobile communication terminal stores the look-up table and color information of one or more pixels in a file according to the compression algorithm of the present invention (**S30**~**S60**). The construction of the data stored in the image file in this case is as shown in Figure 3, for example.

When the mobile communication terminal stores the color information of pixels, if a color of a pixel is a frequently presented color, the mobile communication terminal stores a storage code (e.g., 2 bits) assigned to the corresponding frequently presented color. If the color of the pixel is not the frequently presented color, the mobile communication terminal stores an original identification code (e.g.,16 bits) of the corresponding color. And then, the mobile communication terminal adds a code discrimination bit (1 or 0) in front of the stored storage code of the identification code.

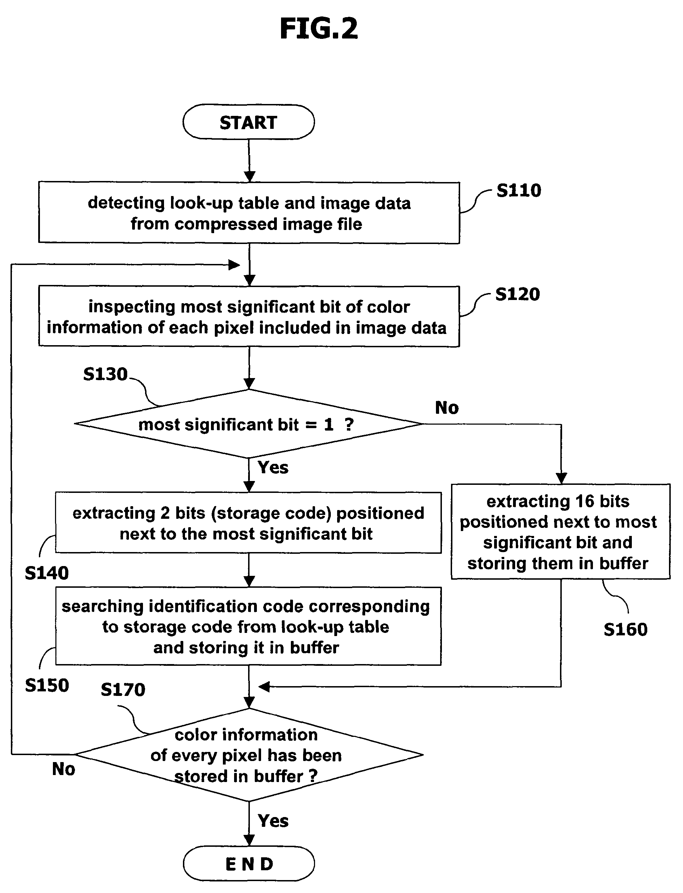

Referring to Figure 2, a method for decompressing a compressed image in accordance with the present invention will now be described. First, a look-up table is detected from a compressed image file (S110). Data stored in the image file, namely, color information of each pixel, is decompressed with reference to the detected look-up table (S120~S170).

In order to decompress the color information of each pixel, the mobile communication terminal checks whether an MSB (Most Significant Bit) of the color information of each pixel is 1 or 0 (S120). If the MSB is 1, then the bits (e.g., storage code) positioned next to the MSB are extracted (S140) and then an identification code (e.g., 16 bits corresponding to the extracted storage code) is searched from the look-up table and stored in the display buffer (S150).

If, however, the MSB is 0, the original identification code positioned next to the MSB is extracted and stored in the display buffer (S160). Through such processes (S120~S160), the mobile communication decompresses the color information of each pixel. After the color information of every pixel constituting an image is stored in the display buffer (S170), colors of each pixel are displayed on the LCD with reference to the stored information.

As so far described, the method for compressing and decompressing an image of a mobile communication system in accordance with the present invention provides a compression rate for image data that is improved by newly assigning a specific identification code of a small size to a color with high presentation frequency. In addition, since the image compression algorithm is simply implemented, the amount of load and resources of a mobile communication required for compressing and decompressing an image.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for compressing an image constituted by a plurality of pixels in a mobile communication terminal, wherein each pixel has one of a plurality of colors, the color of each pixel is represented by color information of each pixel, an original identification code specific to each color is assigned to each color, and the color information of each pixel at least contains the original identification code assigned to the color of each pixel, the method comprising the steps of:
scanning pixels constituting an image;
for each one of the plurality of colors, counting the number of pixels having the one color; determining that the one color is a frequently presented color when the counted number of pixels is more than or equals to a reference number;
assigning to each frequently presented color, a new identification code specific to each frequently presented color, wherein the size of the new identification code is determined according to the number of frequently presented colors and is smaller than that of the original identification code specific to each frequently presented color, and
for each one of the plurality of pixels,
when the color of the one pixel is not the frequently presented color, storing the color information of the one pixel in an image file;
when the color of the one pixel is the frequently presented color, replacing the original identification code contained in the color information of the one pixel with the new identification code assigned to the color of the one pixel, and storing the color information of the one pixel after replacing in the image file,
wherein the color information of each pixel is stored including a code discrimination bit for distinguishing whether an identification code provided to the color information is a new identification code or an original identification code.

2. The method of claim 1, wherein the image file includes a look-up table arranged thereon with a frequently presented color emerging from more than or equal to the reference number of pixels and a new identification code provided to each frequently presented color.

3. The method of claim 1, wherein the image file includes information about a length of the new identification code.

4. The method of claim 2, wherein the image file includes information about a size of the look-up table.

5. A method for decompressing a compressed image in a mobile communication terminal, wherein the compressed image is constituted by a plurality of pixels, each pixel of the compressed image has one of a plurality of colors, an original identification code specific to each color is assigned to each color, a new identification code specific to each of some of the plurality of colors is assigned to each of the some of the plurality of colors, the compressed image is represented by a compressed image file, the compressed image file contains at least color information of each pixel representing the color of the pixel, and or each pixel, the color information contains at least a color identification code being either the original identification code assigned to the color of the pixel or the new identification code assigned to the color of the pixel, wherein size of the original identification code is larger than that of the new identification code and wherein the size of the new identification codes is determined according to the number of the frequently presented colors, the method comprising the steps of: detecting the color information of each pixel contained in the compressed image file,
checking a code discrimination bit included in the color information of each pixel contained in the compressed image file to determine whether the color identification code of the pixel is the new identification code or the original identification code, wherein when the color identification code contained in the color information of the one pixel is determined to be the original identification code, maintaining the color identification code as it is;
for each pixel, when the color identification code contained in the color information of the one pixel is determined to be the new identification code, replacing the new identification code contained in the color information of the one pixel with the corresponding original identification code;
storing the color information of each pixel in a display buffer after replacing; and making reference to the color information of each pixel stored in the display buffer and displaying on a screen the color of each pixel represented by the color information of each pixel stored in the display buffer,
wherein the color information of each pixel includes a code discrimination bit for distinguishing whether the color identification code contained in the color information is the new identification code or the original identification code.

6. The method of claim 5, wherein the code discrimination bit is an MSB (Most Significant Bit) of the color information of each pixel.

7. The method of claim 5, wherein the compressed image file further includes a look-up table which stores correspondence between the original identification code and the new identification code for each of the some of the plurality of colors, the method further comprising the step of:
Detecting the look-up table in the compressed image file and searching the look-up table for the correspondence between the original identification code and the new identification code which is used in the step of replacing.

8. The method of claim 5, wherein the compressed image file includes information on a length of a new identification code.

9. The method of claim 5, wherein the compressed image file includes information on a size of the look-up table.

10. The method of claim 5, wherein the some of the plurality of colors are colors which emerge from more than or equal to a reference number of pixels.

## Patentansprüche

1. Verfahren zum Komprimieren eines von einer Mehrzahl Pixel gebildeten Bilds in einem mobilen Kommunikationsendgerät, wobei jedes Pixel eine von einer Mehrzahl Farben besitzt, wobei die Farbe jedes Pixels durch Farbinformation jedes Pixels dargestellt wird, ein für jede Farbe spezifischer ursprünglicher Identifikationscode jeder Farbe zugewiesen wird und die Farbinformation jedes Pixels zumindest den der Farbe des jeweiligen Pixels zugewiesenen ursprünglichen Identifikationscode enthält, wobei das Verfahren die Schritte umfasst:
Scannen von Pixeln, welche ein Bild bilden,
für jede der Mehrzahl Farben Zählen der Anzahl von Pixeln mit der betreffenden Farbe, Bestimmen, dass die betreffende Farbe eine häufig präsentierte Farbe ist,
wenn die gezählte Anzahl von Pixeln größer oder gleich einer Referenzanzahl ist, zu jeder häufig präsentierten Farbe Zuordnen eines für die jeweilige häufig präsentierte Farbe spezifischen neuen Identifikationscode, wobei die Größe des neuen Identifikationscodes nach Maßgabe der Anzahl der häufig präsentierten Farben ermittelt wird und kleiner als die des für die jeweilige häufig präsentierte Farbe spezifischen ursprünglichen Identifikationscodes ist, und
für jedes der Mehrzahl Pixel
Speichern der Farbinformation des betreffenden Pixels in einer Bilddatei, wenn die Farbe des betreffenden Pixels nicht die häufig präsentierte Farbe ist,
Ersetzen des ursprünglichen Identifikationscodes, der in der Farbinformation des betreffenden Pixels enthalten ist, mit dem neuen Identifikationscode, der der Farbe des betreffenden Pixels zugeordnet wurde, und Speichern der Farbinformation des betreffenden Pixels nach dem Ersetzen in der Bilddatei, wenn die Farbe des betreffenden Pixels die häufig präsentierte Farbe ist,
wenn die Farbinformation des jeweiligen Pixels gespeichert wird, Einfügen eines Codeunterscheidungsbits zum Unterscheiden, ob ein der Farbinformation zugeteilter Identifikationscode ein neuer Identifikationscode oder ein ursprünglicher Identifikationscode ist.

2. Verfahren nach Anspruch 1, wobei die Bilddatei eine Nachschlagetabelle umfasst, welche daran mit einer häufig präsentierten Farbe, die aus mehr oder gleich der Referenzanzahl von Pixeln hervorgeht, und einem für die jeweilige häufig präsentierte Farbe vorgesehenen neuen Identifikationscode angeordnet ist.

3. Verfahren nach Anspruch 1, wobei die Bilddatei Information über eine Länge des neuen Identifikationscodes umfasst.

4. Verfahren nach Anspruch 2, wobei die Bilddatei Information über eine Größe der Nachschlagetabelle umfasst.

5. Verfahren zum Dekomprimieren eines komprimierten Bilds in einem mobilen Kommunikationsendgerät, wobei das komprimierte Bild von einer Mehrzahl Pixeln gebildet ist, wobei jedes Pixel des komprimierten Bilds eine von einer Mehrzahl Farben besitzt, wobei jeder Farbe ein für die jeweilige Farbe spezifischer ursprünglicher Identifikationscode zugewiesen ist, wobei einigen der Mehrzahl Farben ein für die jeweilige der einigen der Mehrzahl Farben spezifischer neuer Identifikationscode zugewiesen ist, wobei das komprimierte Bild durch eine komprimierte Bilddatei dargestellt wird, wobei die komprimierte Bilddatei zumindest Farbinformation jedes Pixels enthält, welche die Farbe des Pixels darstellt, und wobei für jedes Pixel die Farbinformation zumindest einen Farbidentifikationscode enthält, welcher entweder der der Farbe des Pixels zugeordnete ursprüngliche Identifikationscode oder der der Farbe des Pixels zugeordnete neue Identifikationscode ist, wobei die Größe des ursprünglichen Identifikationscodes größer ist als die des neuen Identifikationscodes und wobei die Größe des neuen Identifikationscodes nach Maßgabe der Anzahl der häufig verwendeten Farben bestimmt ist, wobei das Verfahren die Schritte umfasst:
Detektieren der Farbinformation jedes in der komprimierten Bilddatei enthaltenen Pixels,
Prüfen eines Codeunterscheidungsbits, welches in der Farbinformation jedes in der komprimierten Bilddatei enthaltenen Pixels enthalten ist, um zu bestimmen, ob der Farbidentifikationscode des Pixels der neue Identifikationscode oder der ursprüngliche Identifikationscode ist, wobei dann, wenn der in der Farbinformation des betreffenden Pixels enthaltene Farbidentifikationscode als der ursprüngliche Identifikationscode festgestellt wird, der Farbidentifikationscode beibehalten wird,
wie er ist,
für jedes Pixel Ersetzen des in der Farbinformation des betreffenden Pixels enthaltenen neuen Identifikationscodes durch den entsprechenden ursprünglichen Identifikationscode, wenn der in der Farbinformation des betreffenden Pixels enthaltene Farbidentifikationscode als der neue Identifikationscode festgestellt wird,
Speichern der Farbinformation jedes Pixels in einem Anzeigepuffer nach dem Ersetzen, und
Referenzieren der in dem Anzeigepuffer gespeicherten Farbinformation jedes Pixels und Anzeigen der Farbe jedes Pixels, die durch die in dem Anzeigepuffer gespeicherte Farbinformation jedes Pixels dargestellt wird, auf einem Bildschirm,
wobei die Farbinformation jedes Pixels ein Codeunterscheidungsbit zur Unterscheidung umfasst, ob der Farbidentifikationscode, der in der Farbinformation enthalten ist, der neue Identifikationscode oder der ursprüngliche Identifikationscode ist.

6. Verfahren nach Anspruch 5, wobei das Codeunterscheidungsbit ein MSB (höchstwertiges Bit) der Farbinformation jedes Pixels ist.

7. Verfahren nach Anspruch 5, wobei die komprimierte Bilddatei ferner eine Nachschlagetabelle umfasst, welche eine Korrespondenz zwischen dem ursprünglichen Identifikationscode und dem neuen Identifikationscode für jede der einigen der Mehrzahl Farben speichert, wobei das Verfahren ferner den Schritt umfasst:
Detektieren der Nachschlagetabelle in der komprimierten Bilddatei und Durchsuchen der Nachschlagetabelle für die Korrespondenz zwischen dem ursprünglichen Identifikationscode und dem neuen Identifikationscode, welcher bei dem Schritt des Ersetzens benutzt wird.

8. Verfahren nach Anspruch 5, wobei die komprimierte Bilddatei Information über eine Länge eines neuen Identifikationscodes umfasst.

9. Verfahren nach Anspruch 5, wobei die komprimierte Bilddatei Information über eine Größe der Nachschlagetabelle umfasst.

10. Verfahren nach Anspruch 5, wobei die einigen der Mehrzahl Farben Farben sind, welche aus mehr oder gleich einer Referenzanzahl von Pixeln hervorgehen.

## Revendications

1. Procédé de compression d'une image constituée par une pluralité de pixels dans un terminal de communication mobile, dans lequel chaque pixel possède l'une parmi une pluralité de couleurs, la couleur de chaque pixel est représentée par une information de couleur de chaque pixel, un code d'identification d'origine spécifique à chaque couleur est attribué à chaque couleur, et l'information de couleur de chaque pixel contient au moins le code d'identification d'origine attribué à la couleur de chaque pixel, le procédé comprenant les étapes consistant à :
balayer les pixels constituant une image ;
pour chacune parmi la pluralité de couleurs, compter le nombre de pixels comportant la couleur ; déterminer que la couleur est une couleur fréquemment présentée lorsque le nombre de pixels comptés est supérieur ou égal à un nombre de référence ; attribuer à chaque couleur fréquemment présentée, un nouveau code d'identification spécifique à chaque couleur fréquemment présentée, dans lequel la taille du nouveau code d'identification est déterminée conformément au nombre de couleurs fréquemment présentées et est inférieure à celle du code d'identification d'origine spécifique à chaque couleur fréquemment présentée, et
pour chacun parmi la pluralité de pixels,
lorsque la couleur du pixel ne correspond pas à la couleur fréquemment présentée, mémoriser l'information de couleur du pixel dans un fichier image ;
lorsque la couleur du pixel correspond à la couleur fréquemment présentée, remplacer le code d'identification d'origine contenu dans l'information de couleur du pixel par le nouveau code d'identification attribué à la couleur du pixel, et mémoriser l'information de couleur du pixel après remplacement dans le fichier image,
dans lequel l'information de couleur de chaque pixel est mémorisée incluant un bit de discrimination de code pour distinguer si un code d'identification fourni avec l'information de couleur correspond à un nouveau code d'identification ou à un code d'identification d'origine.

2. Procédé selon la revendication 1, dans lequel le fichier image comprend une table de consultation prévue avec celui-ci avec une couleur fréquemment présentée émergeant d'un nombre supérieur ou égal au nombre de référence de pixels et un nouveau code d'identification prévu pour chaque couleur fréquemment présentée.

3. Procédé selon la revendication 1, dans lequel le fichier image comprend une information concernant une longueur du nouveau code d'identification.

4. Procédé selon la revendication 2, dans lequel le fichier image comprend une information concernant une taille de la table de consultation.

5. Procédé de décompression d'une image compressée dans un terminal de communication mobile, dans lequel l'image compressée est constituée par une pluralité de pixels, chaque pixel de l'image compressée présente l'une parmi une pluralité de couleurs, un code d'identification d'origine spécifique à chaque couleur est attribué à chaque couleur, un nouveau code d'identification spécifique à chacune parmi la pluralité de couleurs est attribué à chacune parmi la pluralité de couleurs, l'image compressée est représentée par un fichier image compressé, le fichier image compressé contient au moins une information couleur de chaque pixel représentant la couleur de chaque pixel, et pour chaque pixel, l'information de couleur contient au moins un code d'identification de couleur correspondant soit au code d'identification d'origine attribué à la couleur du pixel soit au nouveau code d'identification attribué à la couleur du pixel, dans lequel la taille du code d'identification d'origine est supérieure à celle du nouveau code d'identification et dans lequel la taille des nouveaux codes d'identification est déterminée conformément au nombre de couleurs fréquemment présentées, le procédé comprenant les étapes consistant à :
détecter l'information de couleur de chaque pixel contenu dans le fichier image compressé,
contrôler un bit de discrimination de code contenu dans l'information de couleur de chaque pixel contenu dans le fichier image compressé pour déterminer si le code d'identification de couleur du pixel correspond au nouveau code d'identification ou au code d'identification d'origine,
dans lequel lorsque le code d'identification de couleur contenu dans l'information de couleur du pixel est déterminé comme étant le code d'identification d'origine, maintenir le code d'identification de couleur tel quel ;
pour chaque pixel, lorsque le code d'identification de couleur contenu dans l'information de couleur du pixel est déterminé comme étant le nouveau code d'identification, remplacer le nouveau code d'identification contenu dans l'information de couleur du pixel par le code d'identification d'origine correspondant ;
mémoriser l'information de couleur de chaque pixel dans une mémoire tampon d'affichage après remplacement ; et
faire référence à l'information de couleur de chaque pixel mémorisé dans la mémoire tampon d'affichage et afficher sur un écran la couleur de chaque pixel représenté par l'information de couleur de chaque pixel mémorisée dans la mémoire tampon d'affichage,
dans lequel l'information de couleur de chaque pixel comprend un bit de discrimination de code pour distinguer si le code d'identification de couleur contenu dans l'information de couleur correspond au nouveau code d'identification ou au code d'identification d'origine.

6. Procédé selon la revendication 5, dans lequel le bit de discrimination de code est un MSB (bit le plus significatif) de l'information de couleur de chaque pixel.

7. Procédé selon la revendication 5, dans lequel le fichier image compressé comprend en outre une table de consultation qui mémorise une correspondance entre le code d'identification d'origine et le nouveau code d'identification pour chacune parmi la pluralité de couleurs, le procédé comprenant en outre l'étape consistant à :
détecter la table de consultation dans le fichier image compressé et rechercher dans la table de consultation la correspondance entre le code d'identification d'origine et le nouveau code d'identification qui est utilisée à l'étape de remplacement.

8. Procédé selon la revendication 5, dans lequel le fichier image compressé comprend une information sur une longueur d'un nouveau code d'identification.

9. Procédé selon la revendication 5, dans lequel le fichier image compressé comprend une information sur une taille de la table de consultation.

10. Procédé selon la revendication 5, dans lequel certaines parmi la pluralité de couleurs sont des couleurs qui émergent d'un nombre de pixels supérieur ou égal à un nombre de pixels de référence.
